# FASCICULE DE BREVET EUROPEEN

(11) **EP 3 063 020 B1**
(45) Date de publication et mention de la délivrance du brevet: **28.03.2018**
(21) Numéro de dépôt: 14796003.3
(22) Date de dépôt: 29.10.2014
(51) Int. Cl.: B29D 30/30, B29D 30/70, B60C 9/26, B60C 9/00, B60C 9/20

(54) **ARMATURE DE SOMMET POUR PNEUMATIQUE D'AVION**
LAUFSTREIFEN FÜR FLUGZEUGREIFEN
TREAD FOR AIRCRAFT TIRE

(30) Priorité: 30.10.2013 FR 1360603
(43) Date de publication de la demande: 07.09.2016
(73) Titulaire: Compagnie Générale des Etablissements Michelin, 63000 Clermont-Ferrand (FR)
(72) Inventeur: ROMERO DE LA OSA, Marc, F-63040 Clermont Ferrand Cedex 9 (FR); DELACROIX, Serge, F-63040 Clermont Ferrand Cedex 9 (FR)
(74) Mandataire: Millanvois, Patrick Jacques Jean
(86) Numéro de dépôt international: PCT/EP2014/073190
(87) Numéro de publication internationale: WO 2015/063131

(56) Documents cités:
- EP-A1- 2 199 105
- EP-A1- 2 199 106
- EP-A1- 2 202 095

## Description

La présente invention concerne un pneumatique pour avion, et, en particulier, l'armature de sommet d'un pneumatique pour avion.

De façon générale, un pneumatique comprend une bande roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Dans ce qui suit, les directions circonférentielle, axiale et radiale du pneumatique désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial pour avion, comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. Les couches de travail conditionnent le comportement mécanique de l'armature de sommet. Les couches de protection protègent essentiellement les couches de travail des agressions susceptibles de se propager à travers la bande de roulement radialement vers l'intérieur du pneumatique. Une couche de sommet, et en particulier une couche de travail, est géométriquement caractérisée par sa largeur axiale, c'est-à-dire la distance entre ses extrémités axiales.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension (module, allongement et force à la rupture) des renforts textiles sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Un matériau élastomérique, tel que celui qui enrobe les renforts des couches de carcasse et des couches de sommet, peut être caractérisé mécaniquement, après cuisson, par des caractéristiques de contrainte-déformation en traction, déterminées par des essais de traction. Ces essais de traction sont effectués, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange élastomérique, exprimé en méga pascals (MPa), la contrainte de traction mesurée pour un allongement de 10% de l'éprouvette.

Le matériau composite constitué par des renforts enrobés dans un mélange élastomérique peut également être caractérisé mécaniquement par des essais de traction réalisés sur un échantillon de largeur unitaire. On peut en particulier mesurer la rigidité en extension K et la force à rupture en extension ou résistance à rupture R, pour un échantillon de matériau composite de largeur unitaire.

Lors de la fabrication d'un pneumatique pour avion, et plus précisément lors de l'étape de pose de l'armature de travail, une couche de travail est le plus souvent obtenue par un enroulement circonférentiel en zigzag ou par un enroulement circonférentiel en spires d'une bandelette, constituée d'au moins un renfort textile continu enrobé dans un mélange élastomérique, sur la surface latérale d'un cylindre de pose. Qu'elle soit réalisée par un enroulement circonférentiel en zigzag ou un enroulement circonférentiel en spires, la couche de travail est alors constituée par la juxtaposition d'une largeur de bandelette à chaque tour d'enroulement.

Par enroulement circonférentiel en zigzag, on entend un enroulement selon la direction circonférentielle du pneumatique et selon une courbe périodique, c'est-à-dire formée d'ondulations périodiques, oscillant entre des extrema. Enrouler une bandelette selon une courbe périodique signifie que la ligne moyenne de la bandelette enroulée, définie comme la ligne équidistante des bords de la bandelette, coïncide avec la courbe périodique. L'amplitude crête-crête, entre les extrema de la courbe périodique, définit ainsi la largeur axiale de la couche de travail, c'est-à-dire la distance entre ses extrémités axiales. La période de la courbe périodique est le plus souvent comprise entre 0.5 fois et 3 fois la circonférence du cylindre de pose de la bandelette. La courbe périodique est par ailleurs caractérisée par l'angle qu'elle forme dans le plan équatorial du pneumatique avec la direction circonférentielle du pneumatique, et par un rayon de courbure, au niveau des extrema de la courbe périodique. Pour un enroulement en zigzag classique, l'angle de la courbe périodique, qui correspond à l'angle formé par les renforts textiles deux à deux parallèles constitutifs de la bandelette, est généralement compris entre 5° et 35° par rapport à la direction circonférentielle. Un enroulement circonférentiel en zigzag implique que les couches de travail sont nécessairement assemblées par paire, une paire de couches de travail constituant un binappe de travail. Un binappe de travail est constitué par deux couches de travail radialement superposées en zone courante, c'est-à-dire dans la portion axialement intérieure aux deux extrémités axiales du binappe de travail, et par plus de deux couches de travail radialement superposées, au niveau de ses extrémités axiales. On appelle surépaisseur d'extrémité axiale le nombre supplémentaires de couches de travail supplémentaires, selon la direction radiale, au niveau des extrémités axiales, par rapport aux deux couches de travail de la zone courante. Cette surépaisseur d'extrémité axiale est générée par les croisements de bandelette, au niveau des extrema de la courbe périodique. Une armature de travail est ainsi constituée par la superposition radiale de plusieurs binappes de travail. Une telle armature de travail comprenant des couches de travail obtenues par un enroulement circonférentiel en zigzag d'une bandelette a été décrite dans les documents EP 0540303, EP 0850787, EP 1163120 et EP 1518666.

D'ailleurs le document EP2199105-A1 montre un pneumatique selon le préambule de la revendication 1.

Par enroulement circonférentiel en spires, on entend un enroulement selon la direction circonférentielle du pneumatique et selon une hélice de diamètre égal au diamètre du cylindre de pose de la bandelette et d'angle moyen compris entre 0° et 5° par rapport à la direction circonférentielle. La couche de travail ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°. Le principe de l'enroulement circonférentiel en spires entraîne l'obtention d'une couche de travail unique et non d'un binappe de travail comme pour l'enroulement en zig-zag.

Dans le cas d'un enroulement circonférentiel en zigzag, il est connu que les surépaisseurs d'extrémités axiales des binappes de travail, sont sensibles à l'apparition de dommages d'endurance, telles que des fissures pouvant évoluer vers une dégradation significative de l'armature de travail et, par conséquent, à une réduction de la durée de vie du pneumatique. Ces fissures peuvent apparaître au niveau des interfaces internes d'une surépaisseur d'extrémité axiale d'un binappe de travail, ou à l'interface entre les surépaisseurs d'extrémités axiales de deux binappes de travail adjacents.

Les inventeurs se sont donnés pour objectif d'améliorer l'endurance de l'armature de travail d'un pneumatique pour avion, en désensibilisant aux risques de fissuration les surépaisseurs d'extrémités axiales des couches de travail.

Cet objectif a été atteint, selon l'invention, par un pneumatique pour avion, comprenant :
- une armature de travail radialement intérieure à une bande de roulement et radialement extérieure à une armature de carcasse,
- l'armature de travail comprenant au moins une couche de travail constituée par un enroulement circonférentiel en zigzag d'une bandelette sur une surface cylindrique ayant pour axe de révolution l'axe de rotation du pneumatique, selon une courbe périodique dont l'amplitude crête-crête définit la largeur axiale L de la couche de travail entre une première et une deuxième extrémités axiales,
- la couche de travail étant constituée, dans tout plan méridien contenant l'axe de rotation du pneumatique, d'un agencement de portions de bandelette s'étendant axialement depuis la première extrémité axiale jusqu'à la deuxième extrémité axiale de la couche de travail,
- la bandelette de largeur W étant constituée de renforts textiles enrobés dans un mélange élastomérique,
dans tout plan méridien contenant l'axe de rotation du pneumatique, l'agencement de portions de bandelette s'étendant axialement depuis la première extrémité axiale jusqu'à la deuxième extrémité axiale de la couche de travail étant tel que deux portions de bandelette consécutives se recouvrent, au moins en partie, sur une largeur de recouvrement e, et la largeur de recouvrement e entre deux portions de bandelette consécutives étant constante sur toute la largeur axiale L de la couche de travail.

Selon l'invention, une couche de travail est constituée par un agencement de portions de bandelette s'étendant axialement depuis la première extrémité axiale jusqu'à la deuxième extrémité axiale de la couche de travail, tel que deux portions de bandelette consécutives se recouvrent, au moins en partie, sur une largeur de recouvrement e. En d'autres termes, deux portions de bandelettes consécutives ne sont pas juxtaposées, comme dans une couche de travail usuelle de l'état de la technique, mais sont partiellement superposées. Une telle couche de travail est appelée couche de travail tuilée. En zone courante, hors des extrémités axiales, une couche de travail tuilée a une épaisseur radiale égale à 2*W/(W-e) fois l'épaisseur de bandelette, où W est la largeur de bandelette et e est la largeur de recouvrement, alors qu'un binappe de travail classique a une épaisseur radiale égale à 2 fois l'épaisseur de bandelette. Au niveau des extrémités axiales, les portions de bandelette sont disposées en chevrons, ce qui implique que la surépaisseur d'extrémité axiale d'une couche tuilée est plus faible que la somme des surépaisseurs d'extrémité axiales d'un empilement radial équivalent de binappes, d'où une réduction du risque de fissuration interne à la surépaisseur d'extrémité axiale. Par ailleurs, le principe du recouvrement permet d'augmenter l'épaisseur de couche de travail en zone courante par rapport à une couche de travail usuelle, donc de diminuer le nombre de couches de travail à superposer pour obtenir une résistance à rupture visée pour l'armature de travail. Par conséquent, le nombre d'interfaces entre surépaisseurs d'extrémités axiales de couches de travail est diminué, ce qui réduit le risque de fissuration aux interfaces entre deux surépaisseurs d'extrémité axiale consécutives.

Une couche de travail tuilée a une résistance à rupture égale à W/(W-e) fois la résistance à rupture R d'une couche de travail classique formée d'une juxtaposition axiale de portions de bandelettes. Ainsi une couche de travail tuilée avec une largeur de recouvrement égale à 0.5 fois la largeur W de la bandelette a une résistance à rupture égale à 2R et est donc équivalente à un binappe de travail. De façon générale, le choix de la largeur de recouvrement permet d'ajuster le niveau de rigidité en extension et de résistance à rupture avec une seule couche de travail.

Le recouvrement de portions de bandelette consécutives est effectif sur toute la largeur de la couche de travail tuilée, ce qui répartit de façon plus homogène la quantité de renforts de bandelette entre la zone courante et les surépaisseurs d'extrémités axiales. Par rapport à une couche de travail classique, la quantité de renforts en zone courante, du fait du recouvrement, est supérieure, donc la résistance à rupture de la couche de travail dans cette zone courante est supérieure, ce qui garantit une meilleure tenue à la pression de gonflage du pneumatique.

Enfin la largeur de recouvrement est constante sur toute la largeur axiale de la couche de travail tuilée, ce qui permet d'avoir une résistance à rupture homogène sur toute la largeur axiale de la couche de travail tuilée.

Avantageusement, la largeur de recouvrement e entre deux portions de bandelette consécutives est au moins égale à 0.5 fois et au plus égale à 0.8 fois la largeur W de la bandelette. Un ratio e/W inférieur à 0.5 ne permet pas d'avoir un effet du tuilage significatif. Un ratio e/W supérieur à 0.8 implique un angle d'inclinaison des portions de bandelettes, dans tout plan méridien, par rapport à la direction axiale, trop élevé : ce qui rend difficile la maîtrise de la géométrie de la couche de travail tuilée.

Selon un premier mode de réalisation préféré, la largeur de recouvrement e entre deux portions de bandelette consécutives est égale à 0.5 fois la largeur W de la bandelette. Cette valeur permet d'obtenir une couche de travail tuilée équivalente à deux couches de travail ou un binappe de travail, du point de vue de la résistance à rupture, avec l'avantage d'avoir une interface entre portions de bandelette de moins au niveau des surépaisseurs d'extrémité axiale, donc un risque de fissuration diminué.

Selon un deuxième mode de réalisation préféré, la largeur de recouvrement e entre deux portions de bandelette consécutives est égale à 0.66 fois la largeur W de la bandelette. Cette valeur permet d'obtenir une couche de travail tuilée équivalente à trois couches de travail, du point de vue de la résistance à rupture, avec l'avantage d'avoir deux interfaces entre portions de bandelette de moins au niveau des surépaisseurs d'extrémité axiale, donc un risque de fissuration diminué.

Avantageusement, la largeur W de la bandelette est au moins égale à 2 mm, de préférence au moins égale à 6 mm. Une bandelette comprend généralement au moins 2 renforts textiles, dont le diamètre est environ égal à 1 mm, d'où une largeur minimale de bandelette égale à 2 mm. Une largeur de bandelette inférieure à 2 mm ne permet pas de réaliser un recouvrement de largeur significative entre deux portions de bandelette consécutives. Une largeur de bandelette au moins égale à 6 mm permet de réduire le temps de pose pour la réalisation de la couche de travail tuilée, et donc d'augmenter la productivité.

Encore avantageusement, la largeur W de la bandelette est au plus égale à 20 mm, de préférence au plus égale à 14 mm. Plus la largeur de bandelette est élevée, plus le nombre d'interfaces entre portions de bandelettes est élevé au niveau des surépaisseurs d'extrémité axiale, donc plus le risque de fissuration augmente. Ainsi une largeur de bandelette au plus égale à 20 mm, et de préférence au plus égale à 14 mm, garantit un bon compromis entre l'endurance et la productivité.

Il est avantageux que la bandelette comprenne des renforts constitués d'un polyamide aliphatique. En effet, les renforts en polyamide aliphatique, tel que le nylon, sont couramment utilisés dans le domaine des pneumatiques pour avion, car ils ont une masse relativement faible, ce qui permet un gain significatif sur la masse du pneumatique et donc sur la charge utile de l'avion.

Alternativement, la bandelette comprend des renforts constitués d'un polyamide aromatique. Les renforts en polyamide aromatique, tel que l'aramide, permettent en effet d'obtenir un bon compromis entre la résistance mécanique et la masse. Les renforts en polyamide aromatique permettent une réduction de la masse de la couche de travail, par rapport à des renforts en polyamide aliphatique, pour une couche de travail ayant une résistance à rupture donnée.

Une autre solution est d'avoir une bandelette comprenant des renforts constitués d'une combinaison d'un polyamide aliphatique et d'un polyamide aromatique. De tels renforts sont usuellement appelés renforts hybrides et présentent les avantages techniques du nylon et de l'aramide : résistance mécanique, déformabilité en traction et masse faible. Les renforts hybrides permettent également une réduction de la masse de la couche de travail, par rapport à des renforts en polyamide aliphatique, pour une couche de travail ayant une résistance à rupture donnée.

L'invention concerne également un procédé de fabrication d'un pneumatique pour avion selon l'invention. Ce procédé comprend une étape de fabrication d'une couche de travail dans laquelle la couche de travail est obtenue par enroulement circonférentiel en zigzag d'une bandelette de largeur W, sur la surface latérale d'un cylindre de pose de rayon R_{f} et ayant pour axe de révolution l'axe de rotation du pneumatique, selon une courbe périodique dont l'amplitude crête-crête définit la largeur axiale L de la couche de travail entre une première et une deuxième extrémités axiales.

Les caractéristiques et autres avantages de l'invention seront mieux compris à l'aide des figures 1 à 5, non représentées à l'échelle :
- Figure 1 : demi-vue en coupe d'un pneumatique de référence, dans un plan méridien ou radial (YZ) passant par l'axe de rotation (YY') du pneumatique.
- Figure 2 : vue d'ensemble d'une bandelette constitutive d'une couche de travail d'un pneumatique de référence.
- Figure 3A et 3B : vues en plan respectivement d'une extrémité axiale d'une couche de travail d'un pneumatique de référence et d'une extrémité axiale d'une couche de travail tuilée d'un pneumatique selon l'invention.
- Figures 4A et 4B : vues en coupe respectivement d'une extrémité axiale d'un binappe de travail d'un pneumatique de référence et d'une extrémité axiale d'une couche de travail tuilée d'un pneumatique selon l'invention.
- Figure 5 : vue en perspective d'une bandelette enroulée circonférentiellement en zig-zag, selon une courbe périodique, sur la surface latérale d'un cylindre de pose, dans le cas d'une couche de travail tuilée.

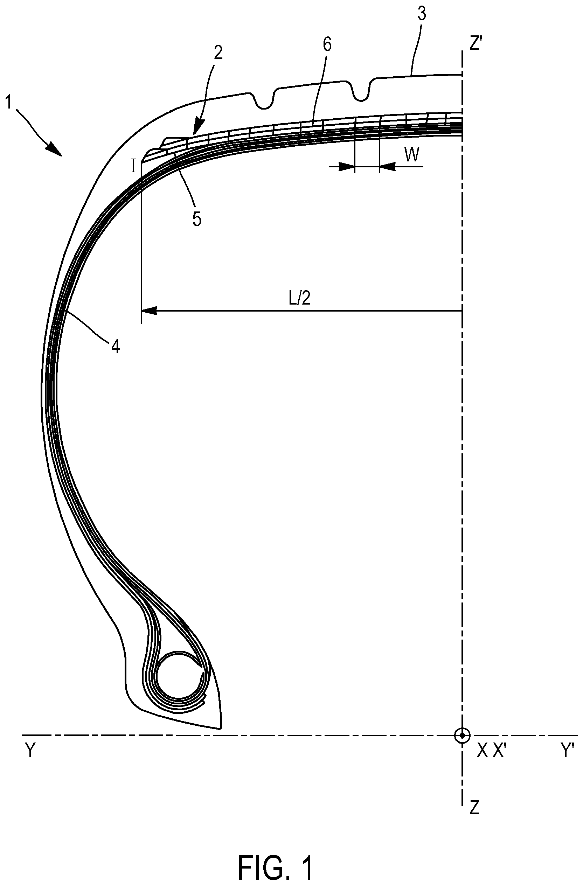

La figure 1 représente une demi-vue en coupe, dans un plan radial ou méridien (YZ) passant par l'axe de rotation (YY') du pneumatique 1, d'un pneumatique 1 pour avion comprenant une armature de travail 2 radialement intérieure à une bande de roulement 3 et radialement extérieure à une armature de carcasse 4. L'armature de travail 2 comprend au moins deux couches de travail 5 radialement superposées et comprenant, à chaque extrémité axiale (I), une surépaisseur d'extrémité axiale comprenant plus de deux couches de travail radialement superposées. Chaque couche de travail 5 est caractérisée par sa largeur axiale L, comprise entre une première extrémité axiale I et une deuxième extrémité axiale I' (non représentée) ou par sa demi-largeur L/2, comprise entre une première extrémité axiale I et le plan équatorial (XZ). Chaque couche de travail 5, dans le cas d'un pneumatique de référence, est constituée par une juxtaposition axiale de bandelettes 6 de largeur W.

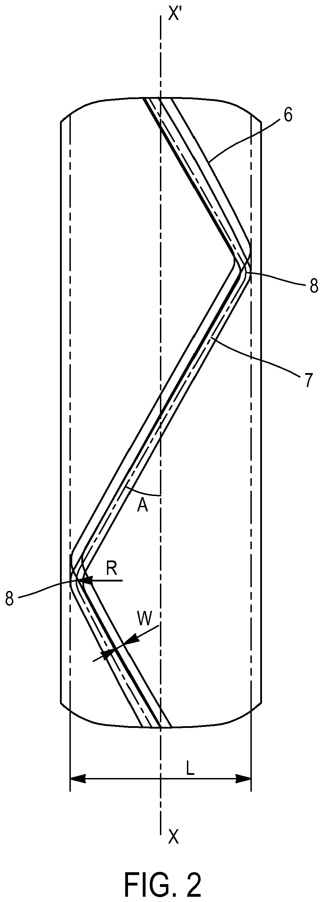

La figure 2 représente une vue d'ensemble d'une bandelette 6 constitutive d'une couche de travail de largeur axiale L, pour un pneumatique de référence. Sur la figure 2, un enroulement en zigzag sur deux tours est représenté. La bandelette 6 de largeur W a une ligne moyenne, s'étendant circonférentiellement, c'est-à-dire selon la direction (XX') selon une courbe périodique 7 comprenant des extrema 8. En d'autres termes, la courbe périodique 7 est la courbe support de la ligne moyenne de la bandelette 6. La courbe périodique 7 forme, dans le plan équatorial (XZ) et avec la direction circonférentielle (XX'), un angle A non nul. La courbe périodique 7 a un rayon de courbure moyen R au niveau de ses extrema 8. A chaque tour d'enroulement en zigzag, la bandelette 6 est décalée axialement de manière à obtenir une juxtaposition axiale de portions de bandelette de largeur W.

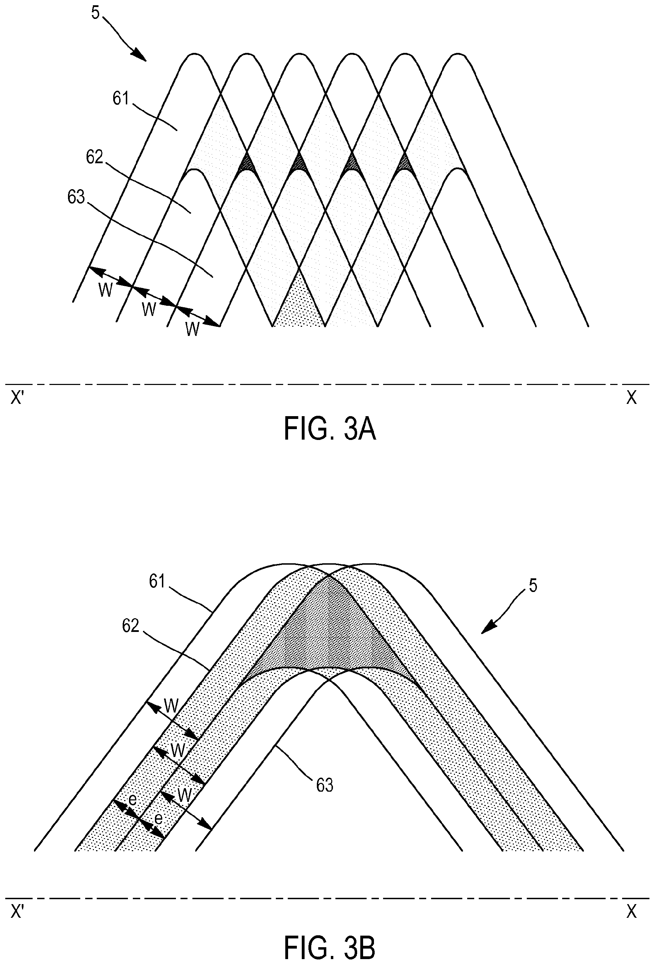

La figure 3A représente une vue en plan d'une extrémité axiale d'une couche de travail 5 d'un pneumatique de référence, constituée d'une juxtaposition axiale de portions de bandelette (61, 62, 63) de largeur W. La zone blanche correspond à une épaisseur de bandelette, la zone gris clair correspond à deux épaisseurs de bandelette et la zone gris foncé correspond à trois épaisseurs de bandelette.

La figure 3B est une vue en plan d'une extrémité axiale d'une couche de travail tuilée 5 d'un pneumatique selon l'invention, constituée d'un agencement de portions de bandelette (61, 62, 63) de largeur W, tel que deux portions de bandelette (61, 62, 63) consécutives se recouvrent, au moins en partie, sur une largeur de recouvrement e. Dans le cas représenté, la largeur de recouvrement e est égale à 0.5 fois la largeur W.

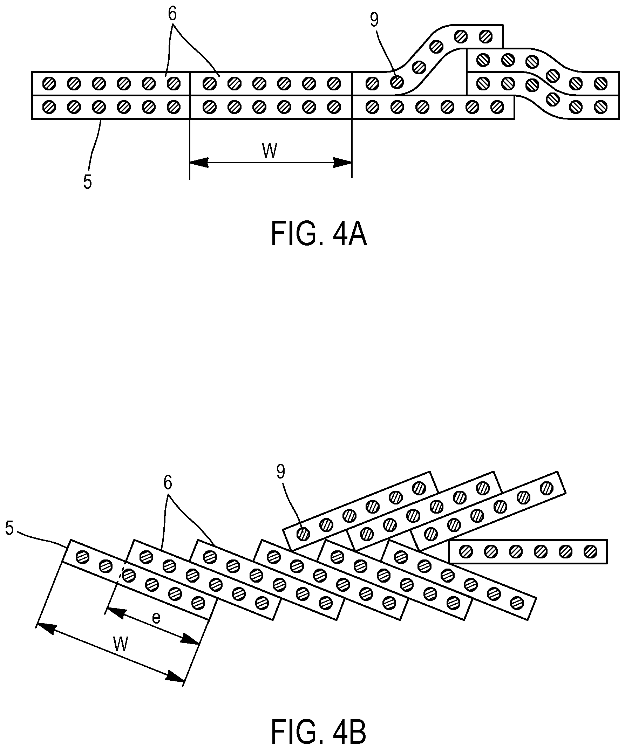

La figure 4A est une vue en coupe, dans un plan radial (YZ), d'une zone d'extrémité axiale d'un binappe de travail d'un pneumatique de référence, constitué de 2 couches de travail 5 radialement superposées en zone courante et de 4 couches de travail au moins en partie superposées au niveau de la surépaisseur d'extrémité axiale. Chaque couche de travail est constituée d'une juxtaposition axiale de portions de bandelette 6 de largeur W. Chaque portion de bandelette 6 comprend des renforts textile 9 enrobés dans un mélange élastomérique.

La figure 4B est une vue en coupe, dans un plan radial (YZ), d'une zone d'extrémité axiale d'une couche de travail tuilée 5 d'un pneumatique selon l'invention. En zone courante, deux portions de bandelette 6 de largeur W consécutives sont superposées sur une largeur de recouvrement e. Dans le cas représenté, la largeur de recouvrement e est égale à 0.5 fois la largeur W. Au niveau de l'extrémité axiale de la couche de travail tuilée, les portions de bandelette 6 sont disposées en chevrons. Chaque portion de bandelette 6 comprend des renforts textile 9 enrobés dans un mélange élastomérique.

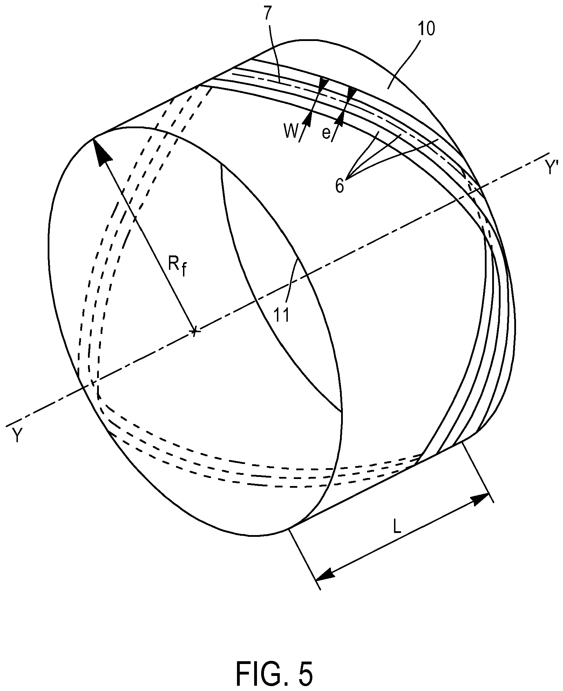

La figure 5 est une vue en perspective d'une bandelette 6 enroulée circonférentiellement en zig-zag, selon une courbe périodique 7, sur la surface latérale 10 d'un cylindre de pose 11 de rayon R_{f}, de hauteur L et ayant pour axe de révolution l'axe de rotation (YY') du pneumatique. Deux portions consécutives de bandelette 6 de largeur W sont superposées sur une largeur de recouvrement e.

Les inventeurs ont réalisé l'invention pour un pneumatique pour avion de dimension 1400X530 R 23.

Dans le pneumatique étudié, la bandelette constitutive d'une couche de travail tuilée a une largeur W égale à 11 mm, et deux portions de bandelette consécutives sont superposées sur une largeur de recouvrement égale à 5.5 mm, d'où un ratio e/W égal à 0.5. L'armature de travail du pneumatique selon l'invention est constituée, radialement de l'intérieur vers l'extérieur, par une superposition radiale d'une couche de travail tuilée, enroulée en zigzag, avec une largeur de recouvrement égale à 5.5 mm, de largeur axiale égale à 390mm, d'un binappe de travail, enroulé en zigzag, de largeur axiale égale à 365 mm et d'une couche de travail, enroulée en spires, de largeur axiale égale à 316 mm. L'armature de travail du pneumatique de référence est constituée, radialement de l'intérieur vers l'extérieur, par une superposition radiale de 3 binappes de travail, enroulés en zigzag, de largeurs axiales respectives 390 mm, 365 et 345 mm et d'une couche de travail, enroulée en spires, de largeur axiale égale à 316 mm. Le gain en endurance d'un pneumatique comprenant une couche de travail tuilée selon l'invention, par rapport au pneumatique de référence conduit à un gain en endurance estimé égal à au moins 10%. Cette endurance est mesurée par le nombre de dommages constatés sur un pneumatique ayant été soumis à un test reglémentaire TSO, tel que défini par la European Aviation European Safety Agency (EASA).

## Revendications

1. Pneumatique (1) pour avion comprenant:
- une armature de travail (2) radialement intérieure à une bande de roulement (3) et radialement extérieure à une armature de carcasse (4),
- l'armature de travail (2) comprenant au moins une couche de travail (5) constituée par un enroulement circonférentiel en zigzag d'une bandelette (6) sur une surface cylindrique ayant pour axe de révolution l'axe de rotation du pneumatique (1), selon une courbe périodique (7) dont l'amplitude crête-crête définit la largeur axiale L de la couche de travail (5) entre une première et une deuxième extrémités axiales (I, I'),
- la couche de travail (5) étant constituée, dans tout plan méridien (YZ) contenant l'axe de rotation du pneumatique (1), d'un agencement de portions de bandelette (6) s'étendant axialement depuis la première extrémité axiale (I) jusqu'à la deuxième extrémité axiale (I') de la couche de travail (5),
- la bandelette (6) de largeur W étant constituée de renforts textiles enrobés dans un mélange élastomérique,
**caractérisé en ce que,** dans tout plan méridien (YZ) contenant l'axe de rotation du pneumatique (1), l'agencement de portions de bandelette (6) s'étendant axialement depuis la première extrémité axiale (I) jusqu'à la deuxième extrémité axiale (I') de la couche de travail (5) est tel que deux portions de bandelette (6) consécutives se recouvrent, au moins en partie, sur une largeur de recouvrement e **et en ce que** la largeur de recouvrement e entre deux portions de bandelette (6) consécutives est constante sur toute la largeur axiale L de la couche de travail (5).

2. Pneumatique (1) pour avion selon la revendication 1, **dans lequel** la largeur de recouvrement e entre deux portions de bandelette (6) consécutives est au moins égale à 0.5 fois et au plus égale à 0.8 fois la largeur W de la bandelette (6).

3. Pneumatique (1) pour avion selon l'une des revendications 1 ou 2, **dans lequel** la largeur de recouvrement e entre deux portions de bandelette (6) consécutives est égale à 0.5 fois la largeur W de la bandelette (6).

4. Pneumatique (1) pour avion selon l'une des revendications 1 ou 2, **dans lequel** la largeur de recouvrement e entre deux portions de bandelette (6) consécutives est égale à 0.66 fois la largeur W de la bandelette (6).

5. Pneumatique (1) pour avion selon l'une quelconque l'une des revendications 1 à 4, **dans lequel** la largeur W de la bandelette (6) est au moins égale à 2 mm, de préférence au moins égale à 6 mm.

6. Pneumatique (1) pour avion selon l'une quelconque des revendications 1 à 5, **dans lequel** la largeur W de la bandelette (6) est au plus égale à 20 mm, de préférence au plus égale à 14 mm.

7. Pneumatique (1) pour avion selon l'une quelconque des revendications 1 à 6, **dans lequel** les renforts (9) de couche de travail (5) sont constitués d'un polyamide aliphatique.

8. Pneumatique (1) pour avion selon l'une quelconque des revendications 1 à 6, **dans lequel** les renforts (9) de couche de travail (5) sont constitués d'un polyamide aromatique.

9. Pneumatique (1) pour avion selon l'une quelconque des revendications 1 à 6, **dans lequel** les renforts de couche (9) de travail (5) sont constitués d'une combinaison d'un polyamide aliphatique et d'un polyamide aromatique.

10. Procédé de fabrication d'un pneumatique (1) pour avion selon l'une quelconque des revendications 1 à 9, comprenant une étape de fabrication d'une couche de travail (5) dans laquelle la couche de travail (5) est obtenue par enroulement circonférentiel en zigzag d'une bandelette (6) de largeur W, sur la surface latérale (10) d'un cylindre de pose (11) de rayon R_{f} et ayant pour axe de révolution l'axe de rotation du pneumatique (1), selon une courbe périodique (7) dont l'amplitude crête-crête définit la largeur axiale L de la couche de travail (5) entre une première et une deuxième extrémités axiales (I, I').

## Patentansprüche

1. Luftreifen (1) für ein Flugzeug, der enthält:
- eine Arbeitsbewehrung (2) radial innen bezüglich eines Laufstreifens (3) und radial außen bezüglich einer Karkassenbewehrung (4),
- wobei die Arbeitsbewehrung (2) mindestens eine Arbeitsschicht (5) enthält, die aus einer zickzackförmigen Wicklung eines Streifens (6) auf einer zylindrischen Fläche besteht, die die Drehachse des Luftreifens (1) als drehsymmetrische Achse hat, gemäß einer periodischen Kurve (7), deren Spitze-Spitze-Amplitude die axiale Breite L der Arbeitsschicht (5) zwischen einem ersten und einem zweiten axialen Ende (I, I') definiert,
- wobei die Arbeitsschicht (5) in jeder die Drehachse des Luftreifens (1) enthaltenden Meridianebene (YZ) aus einer Anordnung von Streifenabschnitten (6) besteht, die sich axial vom ersten axialen Ende (I) bis zum zweiten axialen Ende (I') der Arbeitsschicht (5) erstrecken,
- wobei der Streifen (6) einer Breite W aus textilen Verstärkungen besteht, die von einer Elastomermischung umhüllt sind,
**dadurch gekennzeichnet, dass** in jeder die Drehachse des Luftreifens (1) enthaltenden Meridianebene (YZ) die Anordnung von Streifenabschnitten (6), die sich axial vom ersten axialen Ende (I) bis zum zweiten axialen Ende (I') der Arbeitsschicht (5) erstrecken, so ist, dass zwei aufeinanderfolgende Streifenabschnitte (6) sich zumindest zum Teil über eine Überdeckungsbreite e überdecken, und dass die Überdeckungsbreite e zwischen zwei aufeinanderfolgenden Streifenabschnitten (6) über die ganze axiale Breite L der Arbeitsschicht (5) konstant ist.

2. Luftreifen (1) für ein Flugzeug nach Anspruch 1, wobei die Überdeckungsbreite e zwischen zwei aufeinanderfolgenden Streifenabschnitten (6) mindestens gleich dem 0,5-Fachen und höchstens gleiche dem 0,8-Fachen der Breite W des Streifens (6) ist.

3. Luftreifen (1) für ein Flugzeug nach einem der Ansprüche 1 oder 2, wobei die Überdeckungsbreite e zwischen zwei aufeinanderfolgenden Streifenabschnitten (6) gleich dem 0,5-Fachen der Breite W des Streifens (6) ist.

4. Luftreifen (1) für ein Flugzeug nach einem der Ansprüche 1 oder 2, wobei die Überdeckungsbreite e zwischen zwei aufeinanderfolgenden Streifenabschnitten (6) gleich dem 0,66-Fachen der Breite W des Streifens (6) ist.

5. Luftreifen (1) für ein Flugzeug nach einem der Ansprüche 1 bis 4, wobei die Breite W des Streifens (6) mindestens gleich 2 mm, vorzugsweise mindestens gleich 6 mm ist.

6. Luftreifen (1) für ein Flugzeug nach einem der Ansprüche 1 bis 5, wobei die Breite W des Streifens (6) höchstens gleich 20 mm, vorzugsweise höchstens gleich 14 mm ist.

7. Luftreifen (1) für ein Flugzeug nach einem der Ansprüche 1 bis 6, wobei die Verstärkungen (9) der Arbeitsschicht (5) aus einem aliphatischen Polyamid bestehen.

8. Luftreifen (1) für ein Flugzeug nach einem der Ansprüche 1 bis 6, wobei die Verstärkungen (9) der Arbeitsschicht (5) aus einem aromatischen Polyamid bestehen.

9. Luftreifen (1) für ein Flugzeug nach einem der Ansprüche 1 bis 6, wobei die Verstärkungen (9) der Arbeitsschicht (5) aus einer Kombination eines aliphatischen Polyamids und eines aromatischen Polyamids bestehen.

10. Verfahren zur Herstellung eines Luftreifens (1) für ein Flugzeug nach einem der Ansprüche 1 bis 9, das einen Schritt der Herstellung einer Arbeitsschicht (5) enthält, in dem die Arbeitsschicht (5) durch zickzackförmige Umfangswicklung eines Streifens (6) einer Breite W auf die Seitenfläche (10) eines Verlegungszylinders (11) mit einem Radius R_{f} und mit der Drehachse des Luftreifens (1) als drehsymmetrischer Achse gemäß einer periodischen Kurve (7) erhalten wird, deren Spitze-Spitze-Amplitude die axiale Breite L der Arbeitsschicht (5) zwischen einem ersten und einem zweiten axialen Ende (I, I') definiert.

## Claims

1. Aircraft tyre (1) comprising:
- a working reinforcement (2) radially on the inside of a tread (3) and radially on the outside of a carcass reinforcement (4),
- the working reinforcement (2) comprising at least one working layer (5) made up of a circumferential zigzag winding of a strip (6) on a cylindrical surface having as its axis of revolution the axis of rotation of the tyre (1), with a periodic curve (7), the peak-to-peak amplitude of which defines the axial width L of the working layer (5) between a first and a second axial end (I, I'),
- the working layer (5) being made up, in any meridian plane (YZ) containing the axis of rotation of the tyre (1), of an arrangement of portions of strip (6) extending axially from the first axial end (I) to the second axial end (I') of the working layer (5),
- the strip (6) of width W being made up of textile reinforcers coated in an elastomeric compound,
**characterized in that,** in any meridian plane (YZ) containing the axis of rotation of the tyre (1), the arrangement of portions of strip (6) extending axially from the first axial end (I) to the second axial end (I') of the working layer (5) is such that two consecutive portions of strip (6) overlap, at least in part, over a width of overlap e, **and in that** the width of overlap e between two consecutive portions of strip (6) is constant over the entire axial width L of the working layer (5).

2. Aircraft tyre (1) according to Claim 1, **in which** the width of overlap e between two consecutive portions of strip (6) is at least equal to 0.5 times and at most equal to 0.8 times the width W of the strip (6).

3. Aircraft tyre (1) according to either of Claims 1 and 2, **in which** the width of overlap e between two consecutive portions of strip (6) is equal to 0.5 times the width W of the strip (6).

4. Aircraft tyre (1) according to either of Claims 1 and 2, **in which** the width of overlap e between two consecutive portions of strip (6) is equal to 0.66 times the width W of the strip (6).

5. Aircraft tyre (1) according to any one of Claims 1 to 4, **in which** the width W of the strip (6) is at least equal to 2 mm, preferably at least equal to 6 mm.

6. Aircraft tyre (1) according to any one of Claims 1 to 5, **in which** the width W of the strip (6) is at most equal to 20 mm, preferably at most equal to 14 mm.

7. Aircraft tyre (1) according to any one of Claims 1 to 6, **in which** the reinforcers (9) of the working layer (5) are made of an aliphatic polyamide.

8. Aircraft tyre (1) according to any one of Claims 1 to 6, **in which** the reinforcers (9) of the working layer (5) are made of an aromatic polyamide.

9. Aircraft tyre (1) according to any one of Claims 1 to 6, **in which** the reinforcers (9) of the working layer (5) are made of a combination of an aliphatic polyamide and of an aromatic polyamide.

10. Method of manufacturing an aircraft tyre (1) according to any one of Claims 1 to 9, comprising a step of manufacturing a working layer (5) in which step the working layer (5) is obtained by circumferential zigzag winding of a strip (6) of width W onto the lateral surface (10) of a building drum (11) of radius R_{f} and having as axis of revolution the axis of rotation of the tyre (1), with a periodic curve (7) the peak-to-peak amplitude of which defines the axial width L of the working layer (5) between a first and a second axial end (I, I').
